Europäisches Patentamt

European Patent Office

Office européen des brevets

(19)

(11)　EP 0 193 366 B1

## (12)　EUROPEAN PATENT SPECIFICATION

(45) Date of publication and mention
of the grant of the patent:
**07.02.1996　Bulletin 1996/06**

(51) Int Cl.6: **H02M 3/28**

(21) Application number: 86301284.5

(22) Date of filing: **24.02.1986**

(54) **Power booster switching at zero current**

Leistungserhöher mit Nullstromumschaltung

Elévateur de puissance à commutation par courant nul

(84) Designated Contracting States:
**AT BE CH DE FR GB IT LI LU NL SE**

(30) Priority: **26.02.1985　US 705546**

(43) Date of publication of application:
**03.09.1986　Bulletin 1986/36**

(73) Proprietor: **VLT CORPORATION
San Antonio, Texas 78205 (US)**

(72) Inventor: **Vinciarelli, Patrizio
Andover, Massachusetts 01810 (US)**

(74) Representative: **Deans, Michael John Percy et al
London WC2R OAE (GB)**

(56) References cited:
WO-A-82/03302　　　　　WO-A-86/04749
US-A- 4 290 101

# Description

This invention relates to DC-to-DC power converters of the zero-current switching type, and to power booster modules useful therein.

In some such zero-current switching converters (for example the single-ended forward zero-current switching converters of the kind disclosed in Vinciarelli, U.S. Patent 4,415,959, the disclosure of which is incorporated herein by reference, or series- resonant converters, or other resonant converters), power from a DC source is converted by way of a series of quantized energy transfer cycles into power for delivery to a load. Each energy transfer cycle has a period governed by the time constant of a coupled effective inductance (L) and capacitance (C) in the circuit. A switching device is connected in series with the source. The switching device is switched on and off (at times of essentially zero current) by a controller involving a feedback loop which senses the voltage across the load. The feedback loop spaces the energy transfer cycles at such time intervals that the voltage across the load is kept at a desired level. The power rating of the converter depends on the values of L and C. Such converters typically provide up to 200 watts of power.

One approach to delivering more power is simply to scale up the electrical components.

Another approach is to operate an array of converter modules in parallel, but independently. Some of the modules in the array will then typically saturate, while others make up any shortfall in power needed by the load.

In a third approach, converters within the array are forced to share power but without having to switch coherently at the same frequency. Such incoherent masterslaves configurations lead to beat frequencies.

Other power converters operating on different principles have been proposed.

Thus Hergenhan in US4 290 101 proposes an N-phase digital inverter for inverting an input DC voltage level to an output DC voltage level in which a plurality of N parallel switching circuits is interposed between the input and output terminals, each switching circuit comprising in series a power switch and a transformer. The output of each transformer is coupled through a diode to a common point for filtering to generate the output DC voltage. The output DC voltage is sensed and fed to a logic generator for generating a ring sequence of pulses which activate sequentially each power switch in the plurality thereof. The logic generator controls the ratio of pulse time ON divided by pulse time ON plus pulse time OFF to maintain a desired level of output DC voltage.

The present invention is expressly concerned with zero-current switching converters and is derived from the concept that the pulse by pulse energy quantization inherent in zero-current switching converters provides a mechanism for power sharing by an array of such converters.

In accordance with a first aspect of the present invention, we provide a D.C.-D.C. power conversion array for converting power from a D.C. source for use by a load, characterised in comprising a plurality of zero-current switching converters mounted in parallel, each being connected to receive D.C. power via a respective input power port from said source and to deliver power via a respective output power port to said load in a series of quantized energy transfer cycles with a time constant determined by the equivalent inductance ($L_b$, $L_d$) and equivalent capacitance ($C_b$, $C_d$) of said converter, and each said converter having a controller for triggering in response to a pulse train the start of each said energy transfer cycle in said converter and for terminating each said energy transfer cycle at a time determined by zero-current switching of said converter; one said converter in said array together with its controller serving as a driver module in said array; the or every other converter in said together with its respective controller serving as a power booster module in said array, the controller of the or each power booster module having a control input line thereto which is coupled to another converter of said array to receive a controlling pulse train for the said controller; and said driver module including a signal pulse train generator coupled to its controller for producing said pulse train having a frequency corresponding to the frequency of the energy transfer cycles throughout said array; power being shared between the converters in said array in a constant ratio determined by the said inductances and capacitances.

In a second and alternative aspect of the present invention, there is provided a D.C.-D.C power conversion array for converting power from a D.C. source for use by a load, characterised in comprising a plurality of zero-current switching converters mounted in parallel, each being connected to receive D.C. power via a respective input power port from said source and to deliver power via a respective output power port to said load in a series of quantized energy transfer cycles with a time constant determined by the equivalent inductance ($L_b$) and equivalent capacitance ($C_b$) of said converter, and each said converter having a controller for triggering in response to a pulse train the start of each said energy transfer cycle in said converter and for terminating each said energy transfer cycle at a time determined by zero-current switching of said converter; each converter in said array together with its respective controller serving as a power booster module in said array; each said controller having a control input line thereto, and said array including a signal pulse train generator coupled to each said control input line for producing said pulse train having a frequency corresponding to the frequency of the energy transfer cycles throughout said array; power being shared between the converters of said array in a constant ratio determined by the said inductances and capacitances.

Thus, seen another way, the invention proposes use of a power booster module in a D.C-D.C. power conversion array for converting D.C. power from a source for use by a load, and comprising a plurality of zero-current switching converters mounted in parallel, each being connected to receive D.C. power via a respective input power port from said source and to deliver D.C. power via a respective output power port to said load in a series of quantized energy transfer cycles with a time constant determined by the equivalent inductance and equivalent capacitance of said converter, and each said converter having a controller for triggering in response to a pulse train, the start of each said energy transfer cycle in said converter and for terminating each said energy transfer cycle at a time determined by zero-current switching of said converter, the array further including a signal pulse train generator for producing said pulse train having a frequency corresponding to the frequency of energy transfer cycles throughout said array, power being shared between the converters in said array in a constant ratio determined by the said inductances and capacitances; said power booster module comprising a zero-current switching converter of said array together with its controller, the controller of the power booster module having a control input line thereto coupled either to said signal pulse generator or to another converter of said array to receive a controlling pulse train.

It will be seen that in some embodiments there is a daisy chain array including a driver module and booster modules. The driver module contains a feedback loop sensing the voltage across the load and controlling the frequence of energy transfer cycles, which are time delayed along the chain to reduce ripple and noise. In other embodiments there is a phased array of booster modules driven through a phase shifter to minimize ripple and noise.

Such time or phase controlled arrays of zero-current switching converters with matching energy transfer cycle time constants are effective in providing arbitrarily large amounts of power to a load through coherent power sharing by a sufficiently large number of modules.

The invention is hereinafter more particularly described by way of example only with reference to the accompanying drawings, in which:-

Figs. 1, 2 are block diagrams of a power conversion system;
Fig. 3 is a block diagram of the power booster;
Fig. 4 is a timing chart for Fig. 3;
Fig. 5 is a power conversion system using converters of the forward, single ended type;
Figs. 6, 7 are a block diagram of a daisy chain converter array and a related timing chart; and
Figs. 8, 9 are a block diagram of a phase controlled converter array and a related timing chart.

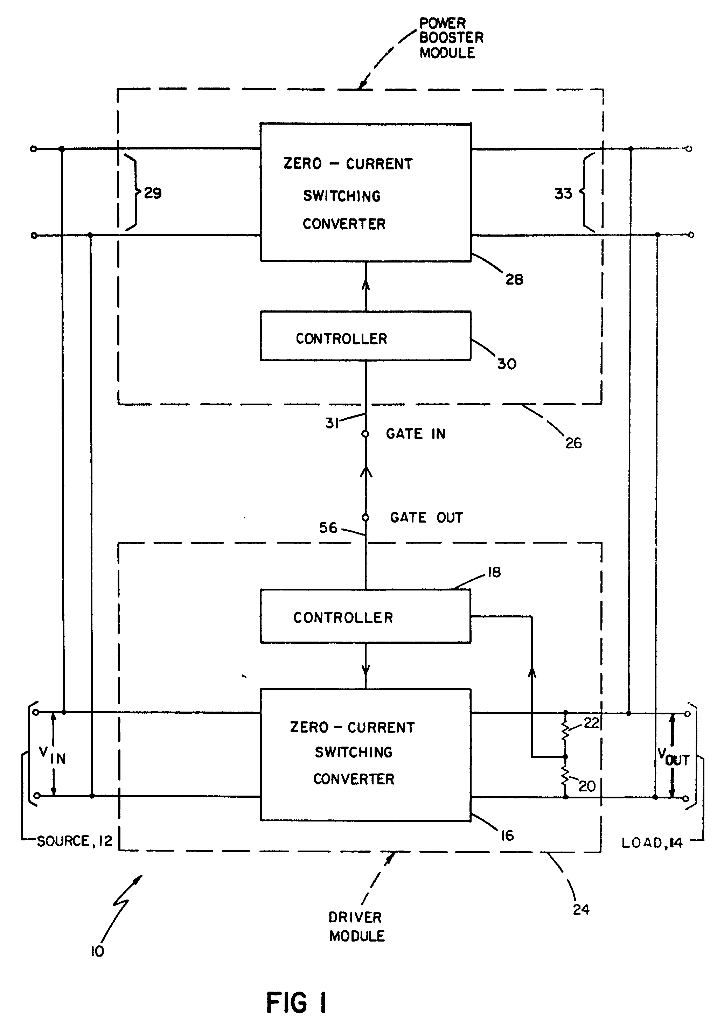

Referring to Fig. 1, a power converter system 10 converts DC power from a source 12 at an input voltage level ($V_{in}$) for delivery to a load 14 at an output voltage level ($V_{out}$). System 10 includes a zero-current switching converter 16 connected between source 12 and load 14, and a controller 18. Controller 18 has an input connected between a pair of series-connected resistors 20, 22 for sensing the voltage level across load 14 and an output connected to converter 16 for carrying switching signals to a switching device (not shown in Fig. 1) in converter 16. Converter 16, controller 18, and resistors 20, 22, together make up a driver module 24.

A power booster module 26 for increasing the amount of current deliverable to load 14 is connected in parallel with driver module 24. Power booster module 26 includes a zero-current switching converter 28 connected via input and output ports 29, 31, between source 12 and load 14, and a controller 30 whose output delivers switching signals to a switching device (not shown in Fig. 1) in converter 28. The input of controller 30 is connected via a control input port 31 to the output of generator 18 to receive a train of control pulses.

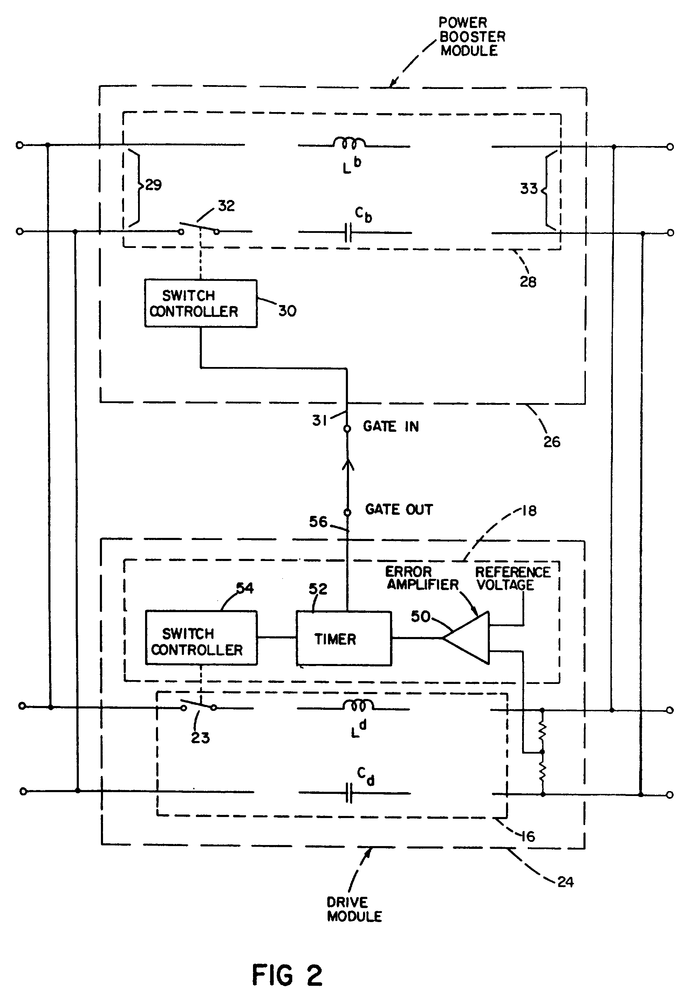

Referring to Fig. 2, converter 16 and 28 can be of the type which include one or more switching devices, for example, a switching device 23 in converter 16, and a switching device 32 in converter 28. Converter 16, 28 are characterized respectively by inductance and capacitance $L_d$, $C_d$ and $L_b$, $C_b$ which define characteristic time constants respectively of

$$\pi \sqrt{L_d\, C_d} \text{ and } \pi \sqrt{L_b\, C_b}.$$

In driver module 24, controller 18 includes an error amplifier 50 which compares the voltage at the load to a reference voltage and delivers a DC voltage output to a timer 52. Timer 52 generates pulses indicative of the intervals at which switches 23, 32 should be switched on and off in order to maintain the voltage across the load at the desired level. Timer 52 is connected to a switch controller 54, which causes switch 23 to turn on and off at essentially zero current, and via a control output port 56 to controller 30 which, after a controlled time delay, causes switch 32 to turn on and off at essentially zero current.

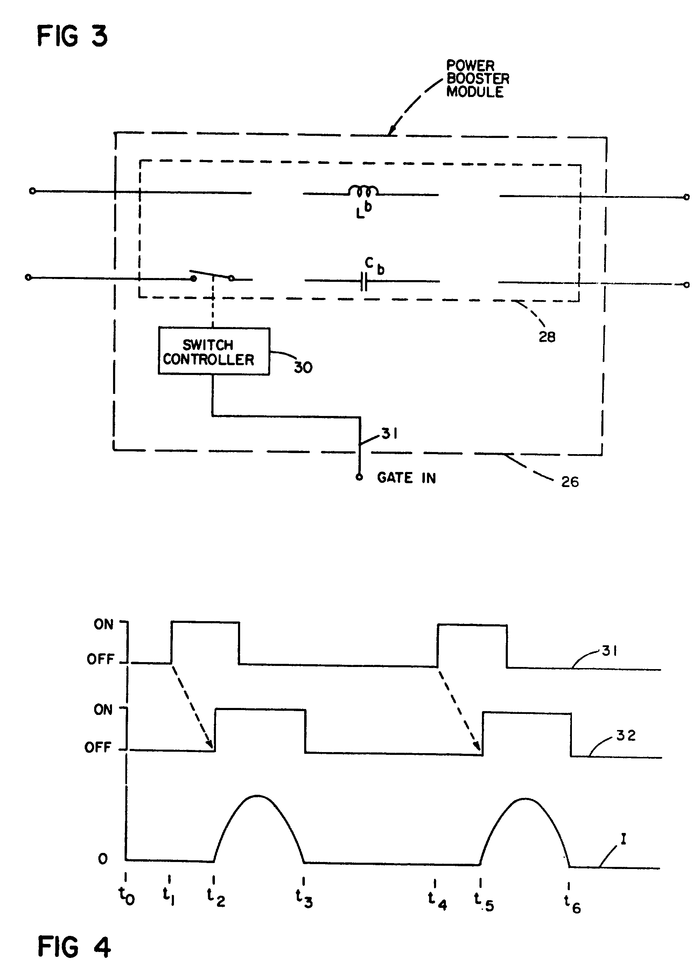

In operation, as shown in Figs. 3, 4, in power booster module 26 at time $t_1$ a pulse is received by controller 30 from port 31. After a delay determined by the switch controller circuitry, at time $t_2$ controller 30 throws switch 32 on. The current I in converter 28 then rises and falls until at time $t_3$ it again reaches zero. Controller 30 senses this zero-current condition and at time $t_3$ throws switch 32 off. At time $t_4$ another pulse appears at port 31 and the steps are repeated. Thus the energy transfer cycles of converter 16, 28 occur at the same frequency but with a time delay between them.

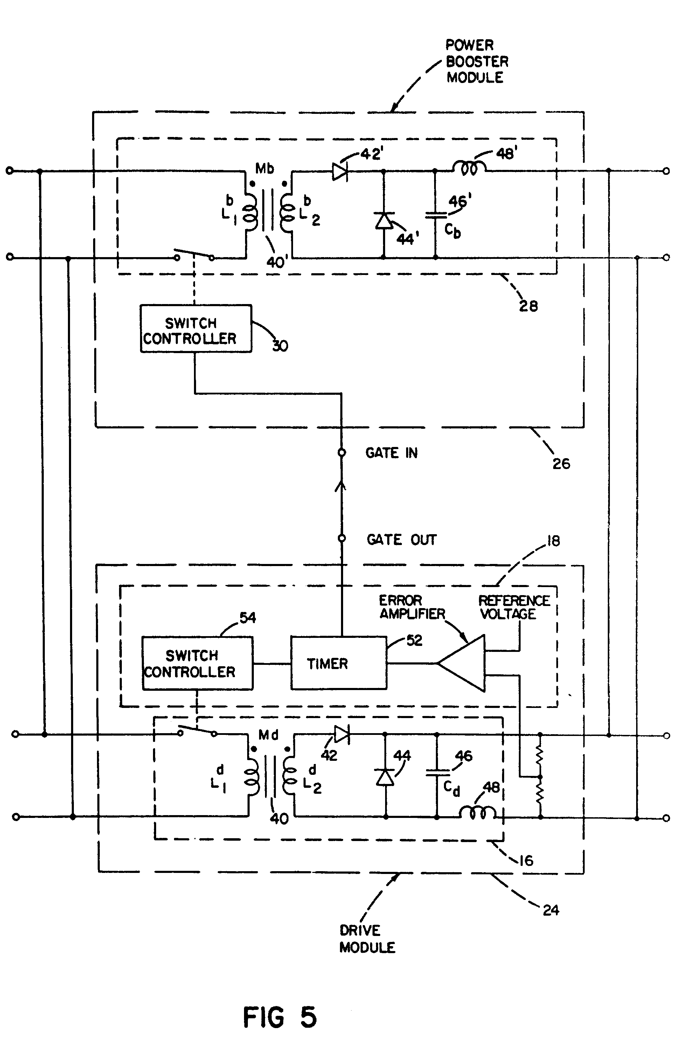

Referring to Fig. 5, converters 16, 28 can be of the forward, single-ended type disclosed in vinciarelli, U.S. Patent 4,415,959. The converters then respectively include transformers 40, $40^1$; rectifier diodes 42, $42^1$; rectifier diodes 44, $44^1$; capacitors 46, $46^1$; and inductors 48, $48^1$. Transformers 40, $40^1$ are characterized respectively by primary winding self-inductances $L1^d$, $L1^b$, secondary winding self-inductances $L2^d$, $L2^b$, and mutual inductances $M^d$, $M^b$. The tranformers are also characterized by secondary leakage inductances

$$L_{2e}^d = (L_1^d L_2^d - M^{d^2})/L_1^d, \quad L_{2e}^b = (L_1^b L_2^b - M^{b^2})/L_1^b.$$

In each converter, the secondary leakage inductance and the capacitance define characteristic time constants respectively of

$$\pi \sqrt{L_{2e}^d C_d}, \text{ and } \pi \sqrt{L_{2e}^b C_b}.$$

The transformers and capacitors in the two converters are specified so that the values of the time constants for the two are sufficiently close to provide for a natural sharing between the converters of the current to be supplied to load 14. The sharing is not necessarily 50/50 but rather corresponds to the ratio of the two capacitances.

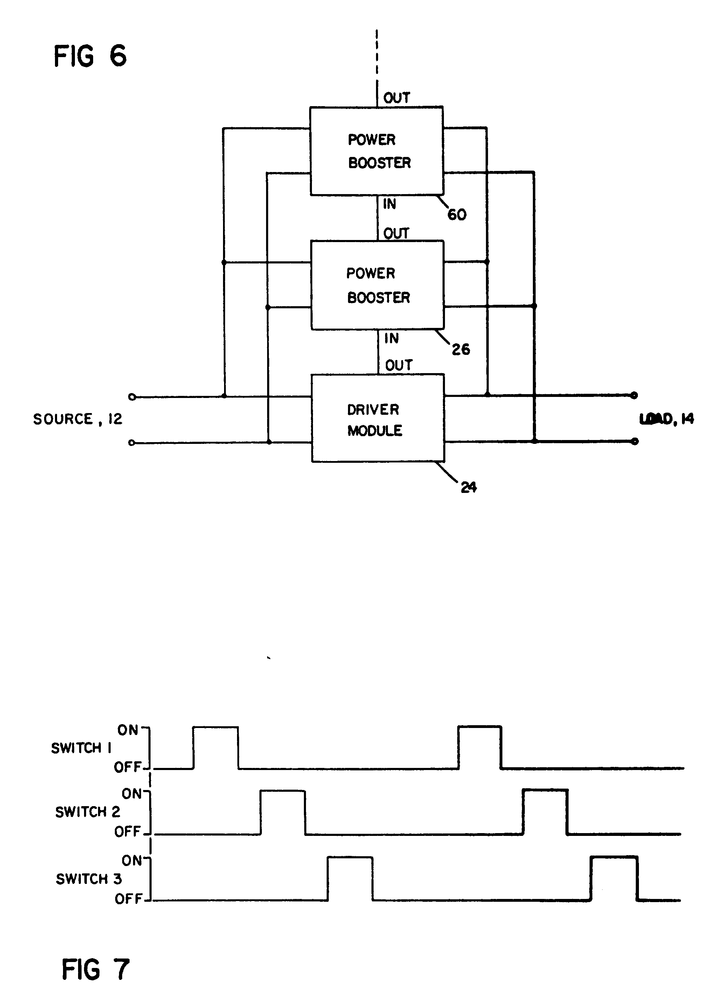

Referring to Figs. 6, 7, the converter array can be extended to include one or more additional power boosters (for example, a power booster 60). The power boosters are arranged in a daisy chain such that each power booster 60 delivers to the next power booster in the chain a signal pulse train corresponding to the occurrences of the energy transfer cycles in the earlier power booster. And each power booster has each of its own energy transfer cycles triggered in response to (but delayed after) each signal pulse in the train from the prior booster in the chain. Fig. 7 shows the resulting states of the switches 1, 2, and 3 in modules 24, 25, 60, respectively.

Thus, larger amounts of power (limited only by the number of modules) can be delivered to the load. The load current is shared naturally. Ripple and noise are reduced.

Other arrangements are possible within the scope of this invention.

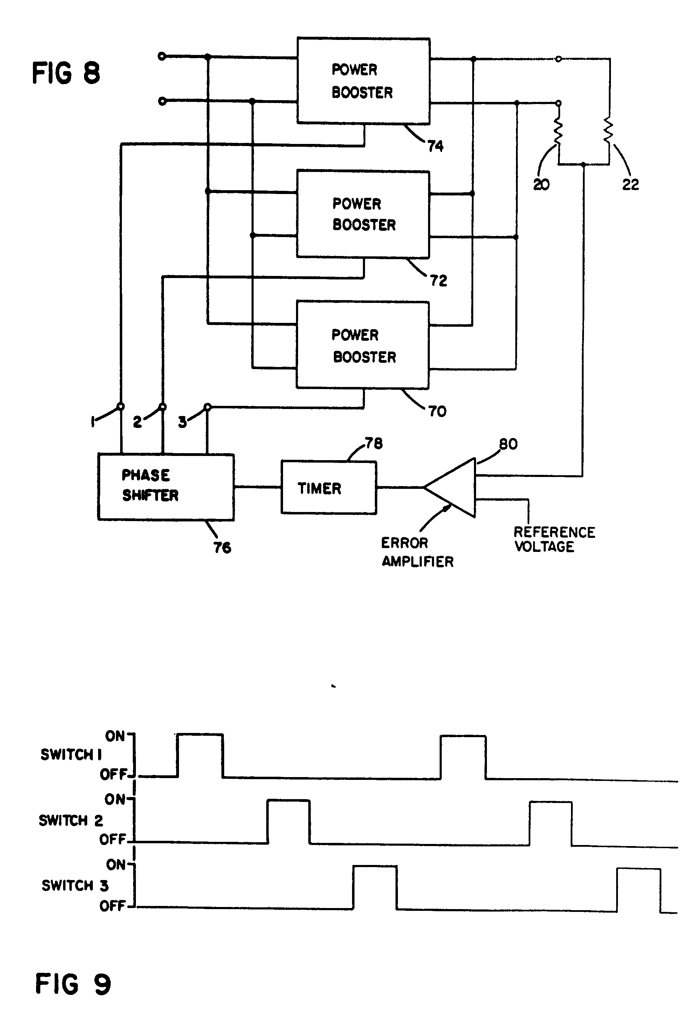

For example, referring to Figs. 8, 9, a power converter array can be formed of any number N of identical power boosters (for example, boosters 70, 72, 74). The control input port of each booster is connected to a phase shifter 76 which receives from a timer 78 (like timer 52) pulses indicative of the intervals at which switches 1, 2, 3 (respectively in boosters 74, 72, 70) should be switched on. Phase shifter 76 then delivers a switch-triggering signal pulse train to each of the boosters to trigger the switching. As shown in Fig. 9, the switching in the different boosters is phase-arrayed at intervals of 360/N degrees.

**Claims**

1. A D.C.-D.C. power conversion array for converting power from a D.C. source (12) for use by a load (14), comprising a plurality of zero-current switching converters (24,26) mounted in parallel, each being connected to receive D.C. power via a respective input power port (29) from said source and to deliver power via a respective output power port (33) to said load in a series of quantized energy transfer cycles with a time constant determined by the equivalent inductance ($L_b$, $L_d$) and equivalent capacitance ($C_b$,

$C_d$) of said converter, and each said converter having a controller (18,30) for triggering in response to a pulse train the start of each said energy transfer cycle in said converter and for terminating each said energy transfer cycle at a time determined by zero-current switching of said converter; one said converter (24) in said array together with its controller serving as a driver module in said array; the or every other converter (26) in said array together with its respective controller serving as a power booster module in said array, the controller of the or each power booster module having a control input line (31) thereto which is coupled to another converter of said array to receive a controlling pulse train for the said controller; and said driver module including a signal pulse train generator (50,52) coupled to its controller for producing said pulse train having a frequency corresponding to the frequency of the energy transfer cycles throughout said array; power being shared between the converters in said array in a constant ratio determined by the said inductances and capacitances.

2. An array according to Claim 1, including a plurality of power booster modules, further characterised in that said driver module and said power booster modules are arranged in a daisy chain, each of said modules delivering power to said load in a series of energy transfer cycles, the energy transfer cycles in one said power booster module (26) being triggered in response to a pulse train provided from said driver module (24) and the energy transfer cycles in each one of said other power booster modules (60) being triggered in response to a pulse train provided from and corresponding to the occurrences of the energy transfer cycles in the next previous power booster module in said daisy chain.

3. A D.C-D.C. power conversion array for converting power from a D.C. source (12) for use by a load (14), comprising a plurality of zero-current switching converters (24) mounted in parallel, each being connected to receive D.C. power via a respective input power port (29) from said source and to deliver power via a respective output power port (33) to said load in a series of quantized energy transfer cycles with a time constant determined by the equivalent inductance ($L_b$) and equivalent capacitance ($C_b$) of said converter, and each said converter having a controller (30) for triggering in response to a pulse train the start of each said energy transfer cycle in said converter and for terminating each said energy transfer cycle at a time determined by zero-current switching of said converter; each converter in said array together with its respective controller serving as a power booster module (70, 72,74) in said array; each said controller having a control input line thereto, and said array including a signal pulse train generator (76,78,80) coupled to each said control input line for producing said pulse train having a frequency corresponding to the frequency of the energy transfer cycles throughout said array; power being shared between the converters of said array in a constant ratio determined by the said inductances and capacitances.

4. An array according to any preceding claim, further characterised in that the controller of the or each power booster module is so arranged that the triggering of said energy transfer cycles in said booster module is phased relative to the triggering of said energy transfer cycles of the others modules in said array, thereby to reduce ripple in the voltage delivered to said load.

5. An array according to any preceding claim, further characterised in that the time constant defined by the equivalent inductance $L_b$ and equivalent capacitance $C_b$ of the or each power booster module is sufficiently close to the time constants of said energy transfer cycles of said array to provide a natural sharing of said current drawn by said load.

6. An array according to both Claim 1 and Claim 5, wherein said driver module has a driver capacitance $C_d$, said array being further characterised in that $C_b$ is chosen so that the ratio $C_b/C_d$ defines the sharing of the current drawn by said load.

7. Use of a power booster module in a D.C.-D.C. power conversion array for converting D.C. power from a source for use by a load, and comprising a plurality of zero-current switching converters mounted in parallel, each being connected to receive D.C. power via a respective input power port from said source and to deliver D.C. power via a respective output power port to said load in a series of quantized energy transfer cycles with a time constant determined by the equivalent inductance and equivalent capacitance of said converter, and each said converter having a controller for triggering in response to a pulse train the start of each said energy transfer cycle in said converter and for terminating each said energy transfer cycle at a time determined by zero-current switching of said converter, the array further including a signal pulse train generator for producing said pulse train having a frequency corresponding to the frequency of energy transfer cycles throughout said array, power being shared between the converters in said array in a constant ratio determined by the said inductances and capacitances; said power booster module comprising a zero-current switching converter (26) of said array together with its controller (30), the controller of the power booster module having a control input line (31) thereto coupled either to said signal pulse generator or to another converter of said array to receive a controlling pulse train.

**Patentansprüche**

1. Gleichstrom-Gleichstrom-Wandlungssystem zur Umwandlung des Stroms einer Gleichstromquelle (12) für eine Last (14), wobei das System aus mehreren parallelgeschalteten Nullstromschaltwandlern (24, 26) besteht, die jeweils so angeschlossen sind, daß sie Gleichstrom über einen entsprechenden Eingangsstromport (29) von der Stromquelle empfangen und Gleichstrom über einen entsprechenden Ausgangsstromport (33) in einer Reihe von quantisierten Energieübertragungszyklen mit einer durch die äquivalente Induktivität ($L_b$, $L_d$) und die äquivalente Kapazität ($C_b$, $C_d$) der Wandler bestimmten Zeitkonstanten an die Last liefern, und jeder Wandler ein Steuergerät (18, 30) zur Triggerung des Beginns jedes Energieübertragungszyklus im Wandler entsprechend einer Impulsfolge und zur Beendigung jedes Energieübertragungszyklus zu einem durch das Nullstromschalten des Wandlers bestimmten Zeitpunkt besitzt; einer dieser Wandler (24) in diesem System zusammen mit seinem Steuergerät als Treibermodul in diesem System dient; der oder jeder andere Wandler (26) im System zusammen mit seinem entsprechenden Steuergerät als Stromverstärkermodul in diesem System arbeitet; das Steuergerät des oder jedes Stromverstärkermoduls eine Steuersignaleingangsleitung (31) besitzt, die mit dem anderen Wandler des Systems zum Empfangen einer Steuerimpulsfolge für das Steuergerät verbunden ist; und das Treibermodul einen Signalimpulsfolgengenerator (50, 52) enthält, der mit seinem Steuergerät verbunden ist und die Impulsfolge mit einer Frequenz erzeugt, die der Frequenz der Energieübertragungszyklen im gesamten System entspricht; der Strom dabei zwischen den Wandlern im System in einem durch die Induktivitäten und Kapazitäten bestimmten konstanten Verhältnis aufgeteilt wird.

2. System nach Anspruch 1 mit mehreren Stromverstärkermodulen, weiter dadurch gekennzeichnet, daß das Treibermodul und die Stromverstärkermodule in einer Daisy-Chain-Verbindung angeordnet sind, wobei jedes Modul Strom in einer Reihe von Energieübertragungszyklen an die Last liefert, die Energieübertragungszyklen in einem Stromverstärkermodul (26) entsprechend einer vom Treibermodul (24) gelieferten Impulsfolge und die Energieübertragungszyklen in jedem der anderen Stromverstärkermodule (60) entsprechend einer Impulsfolge getriggert werden, die vom unmittelbar vorhergehenden Stromverstärkermodul in der Daisy-Chain-Verbindung geliefert wird und dem Auftreten der Energieübertragungszyklen in diesem Modul entspricht.

3. Gleichstrom-Gleichstrom-Wandlungssystem zur Umwandlung des Stroms einer Gleichstromquelle (12) für eine Last (14), wobei das System aus mehreren parallelgeschalteten Nullstromschaltwandlern (24) besteht, die jeweils so angeschlossen sind, daß sie Gleichstrom über einen entsprechenden Eingangsstromport (29) von der Stromquelle empfangen und Gleichstrom über einen entsprechenden Ausgangsstromport (33) in einer Reihe von quantisierten Energieübertragungszyklen mit einer durch die äquivalente Induktivität ($L_b$) und die äquivalente Kapazität ($C_b$) des Wandlers (30) bestimmten Zeitkonstanten an die Last liefern, und jeder Wandler ein Steuergerät (18, 30) zur Triggerung des Beginns jedes Energieübertragungszyklus im Wandler entsprechend einer Impulsfolge und zur Beendigung jedes Energieübertragungszyklus zu einem durch das Nullstromschalten des Wandlers bestimmten Zeitpunkt besitzt; jeder Wandler in diesem System zusammen mit seinem entsprechenden Steuergerät als Stromverstärkermodul (70, 72, 74) in diesem System dient; jedes Steuergerät eine Steuersignaleingangsleitung besitzt; und das System einen Signalimpulsfolgengenerator (76, 78, 80) enthält, der mit jeder Steuersignaleingangsleitung verbunden ist und die Impulsfolge mit einer Frequenz erzeugt, die der Frequenz der Energieübertragungszyklen im gesamten System entspricht; der Strom dabei zwischen den Wandlern im System in einem durch die Induktivitäten und Kapazitäten bestimmten konstanten Verhältnis aufgeteilt wird.

4. System nach einem der vorhergehenden Ansprüche, weiter dadurch gekennzeichnet, daß das Steuergerät des oder jedes Stromverstärkermoduls so angeordnet ist, daß die Triggerung der Energieübertragungszyklen im Stromverstärkermodul gegenüber der Triggerung der Energieübertragungszyklen der Module im System so versetzt erfolgt, daß dadurch die Welligkeit der der Last zugeführten Spannung verringert wird.

5. System nach einem der vorhergehenden Ansprüche, weiter dadurch gekennzeichnet, daß die durch die äquivalente Induktivität $L_b$ und die äquivalente Kapazität $C_b$ bestimmte Zeitkonstante eines oder jedes Stromverstärkermoduls den Konstanten der Energieübertragungszyklen des Systems so nahekommt, daß eine natürliche Aufteilung des von der Last aufgenommenen Stroms erreicht wird.

6. System sowohl nach Anspruch 1 wie auch nach Anspruch 5, wobei das Treibermodul eine Treiberkapazität $C_d$ besitzt und das System weiter dadurch gekennzeichnet ist, daß $C_b$ so gewählt wird, daß das Verhältnis $C_b/C_d$ die Aufteilung des von der Last aufgenommenen Stroms bestimmt.

7. Einsatz eines Stromverstärkermoduls in einem Gleichstrom-Gleichstrom-Wandlungssystem zur Umwandlung des Gleichstroms einer Stromquelle für eine Last, wobei das System aus mehreren parallelgeschalteten Nullstromschaltwandlern besteht, die jeweils so angeschlossen sind, daß sie Gleichstrom über einen entsprechenden Eingangsstromport von der Stromquelle empfangen und Gleichstrom über einen entsprechenden Ausgangsstromport in einer Reihe von quantisierten Energieübertragungszyklen mit einer durch die äquivalente Induktivität und die äquivalente Kapazität der Wandler bestimmten Zeitkonstanten an die Last liefern, und jeder Wandler ein Steuergerät zur Triggerung des Beginns jedes Energieübertragungszyklus im Wandler entsprechend einer Impulsfolge und zur Beendigung jedes Energieübertragungszyklus zu einem durch das Nullstromschalten des Wandlers bestimmten Zeitpunkt besitzt; das System des weiteren einen Signalimpulsfolgengenerator zur Erzeugung der Impulsfolge mit einer Frequenz enthält, die der Frequenz der Energieübertragungszyklen im gesamten System entspricht, der Strom dabei zwischen den Wandlern im System in einem durch die Induktivitäten und Kapazitäten bestimmten konstanten Verhältnis aufgeteilt wird; das Stromverstärkermodul einen Nullstromschaltwandler (26) des Systems zusammen mit seinem Steuergerät (30) enthält, wobei das Steuergerät des Stromverstärkermoduls eine Steuersignaleingangsleitung (31) besitzt, die entweder mit dem Signalimpulsfolgengenerator oder einem anderen Wandler des Systems zur Aufnahme einer Steuerimpulsfolge verbunden ist.

**Revendications**

1. Ensemble de conversion d'énergie continue-continue afin de convertir de l'énergie provenant d'une source continue (12) pour une utilisation par une charge (14), comportant une pluralité de convertisseurs de commutation à courant nul (24, 26) disposés en parallèle, chacun étant connecté pour recevoir de l'énergie continue par l'intermédiaire d'un port d'admission d'énergie respectif (29) à partir de ladite source et pour délivrer de l'énergie par l'intermédiaire d'un port d'énergie de sortie respectif (33) à ladite charge selon une série de cycles de transfert d'énergie quantifiée avec une constante de temps déterminée par l'inductance équivalente ($L_b$, $L_d$) et la capacité équivalente ($C_b$, $C_d$) dudit convertisseur, et chacun desdits convertisseurs ayant un contrôleur (18, 30) pour déclencher en réponse à un train d'impulsions le début de chacun desdits cycles de transfert d'énergie dans le convertisseur et pour mettre fin à chacun desdits cycles de transfert d'énergie à un instant déterminé par le passage à courant nul dudit convertisseur; l'un desdits convertisseurs (24) dans ledit ensemble conjointement avec son contrôleur servant de module de commande dans ledit ensemble; le ou chaque autre convertisseur (26) dans ledit ensemble conjointement avec son contrôleur respectif servant de module d'amplification de puissance dans ledit ensemble, le contrôleur ou le ou chaque module amplificateur de puissance ayant une ligne d'entrée de commande (31) qui est reliée à un autre convertisseur dudit ensemble pour recevoir un train d'impulsions de commande pour ledit contrôleur; et ledit module de commande comprenant un générateur de train d'impulsions de signal (50, 52) relié à son contrôleur pour délivrer ledit train d'impulsions ayant une fréquence correspondant à la fréquence des cycles de transfert d'énergie à travers ledit ensemble; la puissance étant partagée entre les convertisseurs dudit ensemble selon un rapport constant déterminé par lesdites inductances et capacités.

2. Ensemble selon la revendication 1, comprenant une pluralité de modules d'amplification de puissance, caractérisé en outre en ce que ledit module de commande et lesdits modules amplificateurs de puissance sont disposés en marguerite, chacun desdits modules délivrant de l'énergie à ladite charge en une série de cycle de transfert d'énergie, les cycles de transfert d'énergie dans ledit premier module amplificateur de puissance (26) étant déclenchés en réponse à un train d'impulsions délivrées par ledit module de commande (24) et les cycles de transfert d'énergie dans chacun desdits autres modules amplificateurs de puissance (60) étant déclenchés en réponse à un train d'impulsions délivrés par et correspondant à l'apparition des cycles de transfert d'énergie dans le module amplificateur de puissance immédiatement précédent dans ladite marguerite.

3. Ensemble de conversion d'énergie continue-continue pour convertir de l'énergie provenant d'une source continue (12) pour une utilisation par une charge (14), comportant une pluralité de convertisseurs de commutation à courant nul (24) disposés en parallèle, chacun étant relié pour recevoir de l'énergie continue par l'intermédiaire d'un port d'admission d'énergie respectif (29) de ladite source et pour délivrer de l'énergie par l'intermédiaire d'un port de sortie d'énergie respectif (33) à ladite charge en une série de cycle de transfert d'énergie quantifiée avec une constante de temps déterminée par l'inductance équivalente ($L_b$) et la capacité équivalente ($C_b$) dudit convertisseur; et chacun desdits convertisseurs ayant un contrôleur (30) pour déclencher en réponse à un train d'impulsions le début de chacun desdits cycles de transfert d'énergie dans ledit convertisseur et pour mettre fin à chacun desdits cycles de transfert d'énergie à un instant déterminé par le passage à courant nul dudit convertisseur; chaque convertisseur dans ledit ensemble conjointement avec son contrôleur respectif servant de module amplificateur de puissance (70, 72, 74) dans ledit ensemble; chacun desdits contrôleurs ayant une ligne d'entrée de commande, et ledit ensemble comprenant un générateur de train d'impulsions de signal (76, 78, 80) relié à chacune des lignes d'entrée de commande pour produire ledit train d'impulsions ayant une fréquence correspondant à la fréquence des cycles de transfert d'énergie à travers ledit ensemble; l'énergie étant partagée entre ledit ensemble de convertisseurs selon un rapport constant déterminé par lesdites inductances et lesdites capacités.

4. Ensemble selon l'une quelconque des revendications précédentes, caractérisé en outre en ce que le contrôleur du ou de chacun des modules amplificateurs de puissance est disposé de sorte que le déclenchement desdits cycles de transfert d'énergie dans ledit module amplificateur est en phase par rapport au déclenchement desdits cycles de transfert d'énergie des autres modules dudit ensemble, de manière à réduire l'ondulation dans la tension délivrée à ladite charge.

5. Ensemble selon l'une quelconque des revendications précédentes, caractérisé en ce que la constante de temps définie par l'inductance équivalente $L_b$ et la capacité équivalente $C_b$ du ou de chaque autre module amplificateur de puissance est suffisamment proche des constantes de temps desdits cycles de transfert d'énergie dudit ensemble pour assurer un partage naturel dudit courant drainé par ladite charge.

6. Ensemble selon les revendications 1 et 5, dans lequel ledit module de commande possède une capacité de commande $C_d$, ledit ensemble étant en outre caractérisé en ce que $C_b$ est choisi de sorte que le rapport $C_b/C_d$ définit le partage du courant drainé par ladite charge.

7. Utilisation d'un module amplificateur de puissance dans un ensemble de conversion d'énergie continue-continue pour convertir une énergie continue provenant d'une source pour une utilisation par une charge, et comportant une pluralité de convertisseurs de commutation à courant nul disposés en parallèle, chacun étant relié pour recevoir de l'énergie continue par l'intermédiaire d'un port d'énergie d'entrée respectif depuis ladite source et pour délivrer de l'énergie continue par l'intermédiaire d'un port d'énergie de sortie respectif à ladite charge en une série de cycles de transfert d'énergie quantifiée avec une constante de temps déterminée par l'inductance équivalente et la capacité équivalente dudit convertisseur et chacun desdits convertisseurs ayant un contrôleur pour déclencher en réponse à un train d'impulsions le début de chacun desdits cycles de transfert d'énergie dans ledit convertisseur et pour mettre fin à chacun desdits cycles de transfert d'énergie à un instant déterminé par le passage à courant nul dudit convertisseur, ledit ensemble comprenant en outre un générateur de train d'impulsions de signal pour produire ledit train d'impulsions ayant une fréquence correspondant à la fréquence des cycles de transfert d'énergie à travers ledit ensemble, l'énergie étant partagée entre les convertisseurs dudit ensemble selon un rapport constant déterminé par lesdites inductances et capacités; ledit module amplificateur de puissance comportant un convertisseur de commutation à courant nul (26) dudit ensemble conjointement avec son contrôleur (30), le contrôleur du module amplificateur de puissance ayant une ligne d'entrée de commande (31) reliée soit audit générateur d'impulsions de signal, soit à un autre convertisseur dudit ensemble pour recevoir un train d'impulsions de commande.

POWER
BOOSTER
MODULE

ZERO — CURRENT
SWITCHING
CONVERTER

29

33

28

CONTROLLER

30

31    GATE IN

26

GATE OUT

56

18

CONTROLLER

ZERO — CURRENT
SWITCHING
CONVERTER

22

20

16

$V_{IN}$

$V_{OUT}$

SOURCE, 12

LOAD, 14

10

DRIVER
MODULE

24

FIG I

FIG 2

## FIG 3

POWER
BOOSTER
MODULE

$L^b$

$C_b$

SWITCH
CONTROLLER    30

28

31

GATE IN    26

ON

OFF    31

ON

OFF    32

I

0

$t_0$  $t_1$  $t_2$  $t_3$  $t_4$  $t_5$  $t_6$

## FIG 4

FIG 5

FIG 6

SOURCE , 12

POWER
BOOSTER
OUT
IN
60

POWER
BOOSTER
OUT
IN
26

DRIVER
MODULE
OUT
24

LOAD, 14

SWITCH 1    ON    OFF

SWITCH 2    ON    OFF

SWITCH 3    ON    OFF

FIG 7

## FIG 8

POWER BOOSTER 74

POWER BOOSTER 72

POWER BOOSTER 70

20 22

PHASE SHIFTER 76

TIMER 78

ERROR AMPLIFIER 80

REFERENCE VOLTAGE

1 2 3

SWITCH 1    ON / OFF

SWITCH 2    ON / OFF

SWITCH 3    ON / OFF

## FIG 9